# EUROPÄISCHE PATENTSCHRIFT

(11) **EP 1 621 243 B1**
(45) Veröffentlichungstag und Bekanntmachung des Hinweises auf die Patenterteilung: **14.09.2011**
(21) Anmeldenummer: 05016442.5
(22) Anmeldetag: 28.07.2005
(51) Int. Cl.: B01D 45/16, B01D 53/26, B04C 3/06, F24F 3/14, B64D 13/06

(54) **Wasserabscheider für Klimaanlagen**
Water separator for air conditioning systems
Séparateur d'eau pour un système de climatisation

(30) Priorität: 28.07.2004 DE 102004036568
(43) Veröffentlichungstag der Anmeldung: 01.02.2006
(73) Patentinhaber: Liebherr-Aerospace Lindenberg GmbH, 88161 Lindenberg/Allgäu (DE)
(72) Erfinder: Milde, Bertram, Dipl.-Ing. (FH), 88171 Weiler (DE); Baldauf, Georg, Dipl.-Ing. (Univ.), 88161 Lindenberg (DE)
(74) Vertreter: Laufhütte, Dieter

(56) Entgegenhaltungen:
- WO-A-99/59867
- DE-C- 848 348
- GB-A- 832 255
- GB-A- 1 089 311
- US-A- 2 921 646
- US-A- 4 349 360
- US-A- 4 769 050
- US-A1- 2002 189 995
- US-A1- 2003 115 843
- US-B1- 6 426 010
- US-B1- 6 666 338

## Beschreibung

Die Erfindung betrifft einen Wasserabscheider für Klimaanlagen, vorzugsweise Flugzeugklimaanlagen nach dem Oberbegriff des Anspruchs 1.

Gegenwärtig kommen bei einer großen Anzahl ausgeführter Flugzeugklimaanlagen sogenannte Drallwasserabscheider zum Einsatz. Diese Abscheider haben eine längliche, röhrenartige Bauform. Stromabwärts der Eintrittsöffnung wird mittels eines Drallgenerators die feuchte beladene Luft in eine Drallbewegung versetzt und die Tröpfchen durch die Zentrifugalbeschleunigung in die Innenwand des Wasserabscheiders transportiert. Weiter stromabwärts werden diese Wassertröpfchen über einen in die Abscheidekammer hinreichenden, ringförmigen Spalt abgeschieden. Dieses Verfahren ermöglicht hohe Trenngrade großer Wassertröpfchen für bestimmte mittlere Strömungsgeschwindigkeiten der feuchten Luftmassenströmung. Der Trenngrad bei kleineren, spray- bzw. nebelartigen Tröpfchen ist deutlich schlechter. Auch zeigt dieses Prinzip bei gegenüber dem Auslegungspunkt erhöhten Strömungsgeschwindigkeiten eine deutliche, nicht zu vernachlässigende Trenngradeinbuße. Schließlich bietet der Drallwasserabscheider bezüglich der Installation und Integration im Kühlaggregat Nachteile aufgrund der benötigten Baulänge, da zwischen dem Drallgenerator und dem Ringspalt, der in die Abscheidekammer hineinreicht, mindestens eine dem Betrag des Außendurchmessers entsprechende Länge notwendig ist, um hohe Trenngrade zu erreichen. Durch die hohen Strömungsgeschwindigkeiten von 15 bis 20 m/s im Wasserabscheider kann es darüber hinaus zum Mitreißen von bereits an der Innenwandung des Wasserabscheidergehäuses angelagerten Tröpfchen kommen. Insbesondere an den Endkanten der Drallerzeugerschaufeln wird angelagertes Wasser wieder zerstäubt, wodurch spray- und nebelartige Tröpfchen entstehen, die aufgrund der kurzen Wegstrecke zwischen Drallgenerator und Abscheidekammer eintritt (Ringspalt) und der daraus resultierenden kurzen Wirkzeit der Zentrifugalkraft nicht wieder abgeschieden werden können.

Eine geringfügige Verkürzung der Baulänge von Drallabscheidern kann durch Verwendung einer zweistufigen Abscheidung, wie sie bereits in der US 6,524,373 B2 vorgeschlagen wird, erreicht werden. Abweichend von einem Drallabscheider, wie er eingangs beschrieben wurde, werden hier zwei Abscheidekammern hintereinander positioniert. Dies führt zu dem Vorteil, dass die Gefahr des Mitreißens bereits an der Innenwandung angelagerter Tröpfchen verringert wird, da diese unmittelbar nach der Anlagerung in der ersten Stufe abgeschieden werden. Das wird ermöglicht, da die erste Abscheidekammer stromaufwärts näher am Wirbelgenerator positioniert ist als beim einstufigen Abscheider.

Die Eintritts- und Austrittsöffnung des in der US 6,524,373 B2 beschriebenen Abscheiders liegen gerätebedingt weiter auseinander, so dass die Anforderungen an eine zunehmend kompaktere Konfiguration der Komponenten des Flugzeugkühlaggregats erfüllt werden können. Eine wesentliche Verbesserung des Trenngrades für nebelförmige Tröpfchen kann mit diesem Abscheider nicht erreicht werden. Außerdem zeigt diese Ausführung keine wesentliche Verbesserung der erzielbaren Trenngrade im Vergleich zu den beschriebenen, konventionellen Drallabscheidern bei Flugzeugklimaanlagen. Schließlich können auch hinsichtlich des Druckverlustes keine niedrigeren Werte realisiert werden.

Das bisher angewandte Drallabscheiderprinzip bietet den Nachteil, dass die zu erzielenden Trenngrade bei höheren Abscheidekammerdrücken negativ beeinflusst werden können.

Einen Drallabscheider mit Maßnahmen zur Reduzierung des Abscheidekammerdrucks zeigen die DE 370 335 8 C2 und auch die DT 233 891 3 A1. Bei dieser Ausführung ist - wie bei den herkömmlichen Drallabscheidern - die Abscheidekammer mittels eines Einlassabschnittes mit dem Hauptluftstrom verbunden. Darüber hinaus wird die durch die Abscheidekammer strömende, feuchtigkeitsfreie Luft über einen Auslassabschnitt (Ejektor) dem Hauptluftstrom stromabwärts der Abscheidekammer wieder zugeführt. Dies führt zur Verringerung des Abscheidekammerdruckes und des Leckage-Luftanteils. Durch die labyrinthartige Gestaltung der Stromführung durch die Abscheidekammer wird die Strömung verzögert (bei DE 370 335 8 C2 kontinuierlich, bei DT 233 891 3 A1 durch Aufweitung im Umlenkbereich) und mehrfach umgelenkt, was das Ausfallen der Wassertröpfchen begünstigt.

Diese Ausführung hat aufgrund der komplexen Geometrie der Abscheidekammer den Nachteil, dass sowohl eine sehr große Baulänge des Abscheiders, als auch ein großer Durchmesser der Abscheidekammer die Integration in das Kühlaggregat erschweren bzw. die Flexibilität der Komponentenkonfiguration im Kühlaggregat wesentlich durch den Wasserabscheider eingeschränkt ist. Ebenfalls resultiert diese Ausführung prinzipbedingt in einem deutlich höheren Komponentengewicht im Vergleich zu einem konventionellen Drallabscheider. Hinsichtlich des Druckverlustes des Abscheiders kann mit dieser Ausführung keine wesentliche Verbesserung im Vergleich zu herkömmlichen Drallabscheidern erzielt werden.

Eine Lösung für eine kompakte Ausführung eines Wasserabscheiders für Flugzeugklimaanlagen zeigt die US 5,800,582 A. Die hier vorgeschlagene Ausführung ist als Drallabscheider ausgeführt, bei dem der in einem außerzentrisch angeordneten Einlassrohr zuströmende, feuchte beladene Frischluftstrom gegen eine halbkugelförmige Prallvorrichtung befördert wird. Durch die Massenträgheitskräfte werden die Wassertröpfchen in Richtung der Randbegrenzungskanten dieser Prallvorrichtung transportiert. Dort werden die Tröpfchen mit Hilfe einer umlaufenden Fangrinne vom feuchtebeladenen Frischluftstrom abgetrennt. Der feuchtigkeitsfreie Luftstrom wird über einen Luftdurchgang in Richtung der Auslassöffnung transportiert. Bedingt durch die starke Umlenkung des feuchtebeladenen Frischluftstromes müssen hier zur Erreichung guter Trenngrade hohe Druckverluste in Kauf genommen werden. Ein Mitreißen von Wassertröpfchen mit dem Hauptluftstrom kann durch die starke Strömungsumlenkung ebenfalls nicht vollständig vermieden werden.

Aufgabe der vorliegenden Erfindung ist es, einen Wasserabscheider für Klimaanlagen zu schaffen, bei dem aus einem feuchtebeladenen Luftmassenstrom die disperse Phase abgetrennt werden kann, wobei eine hohe Stabilität der Abtrennleistung gegenüber veränderten Eingangsparametern, d. h. beispielsweise der mittleren Strömungsgeschwindigkeit, der Feuchtebeladung und dem Systemdruck gewährleistet wird.

Erfindungsgemäß wird diese Aufgabe durch die Kombination der Merkmale des Anspruchs 1 gelöst. Hier wird ein Wasserabscheider für Klimaanlagen mit einem Drallerzeuger, einem diesen umgebendes Gehäuse, einer um das Gehäuse herum angeordneten Abtrennkammer zum Sammeln des an der Gehäuseinnenwandung abgeschiedenen Wassers, die in einem Abscheidesumpf mündet und mindestens eine Öffnung, die im Gehäuse zur Abtrennkammer hin vorgesehen ist, dadurch weitergebildet, dass die Abtrennkammer mehrstufig ausgebildet ist, wobei die erste Stufe der Abtrennkammer einer Akkumulation der Wassertropfen dient, die zweite Stufe der Abtrennkammer dem Absetzen der akkumulierten Wassertropfen dient und die dritte Stufe der Abtrennkammer der Absaugung des Luftmassenstromes dient. Wesentlicher Punkt der Erfindung ist also die Erkenntnis, dass eine aktive Entlüftung der mehrstufigen Abtrennkammer eine hohe Stabilität der Abtrennleistung gegenüber veränderten Eingangsparametern gewährleistet.

Bevorzugte Ausgestaltungen der Erfindung ergeben sich aus den sich an den Hauptanspruch anschließenden Unteransprüchen.

Die drei Stufen der Abtrennkammer sind dadurch gebildet, dass eine Drallfläche die erste Stufe von der zweiten Stufe trennt und eine Trennwand die zweite Stufe von der dritten Stufe trennt. Dabei weist sowohl die Drallfläche, die die erste von der zweiten Stufe trennt und die Trennwand, die die zweite von der dritten Stufe trennt, jeweils zumindest eine Öffnung auf.

Bevorzugte Ausgestaltungen der Erfindung ergeben sich aus den sich an den Hauptanspruch anschließenden Unteransprüchen.

Gemäß einer vorteilhaften Ausgestaltung der Erfindung können die drei Stufen und ihre zugeordneten Funktionen in voneinander getrennten Baueinheiten realisiert sein.

Die Absaugung des Luftmassenstromes kann aus einer der zweiten Stufe nachgeordneten Baueinheit durch interne Zuführung in den Primärmassenstrom erfolgen.

Dabei kann die interne Absaugung des Luftmassenstromes und die interne Zuführung in den Primärmassenstrom mittels eines Anti-Pitot-Rohres erfolgen. Die interne Absaugung des Luftmassenstroms und die interne Zuführung in den Primärmassenstrom kann mittels Anzapfens des Innenradius eines nachgeschalteten Krümmers erfolgen.

Die interne Absaugung des Luftmassenstroms und die interne Zuführung in den Primärmassenstrom kann mittels eines ringspaltförmigen Ejektors erfolgen.

Die Absaugung des Luftmassenstroms kann aus einer der zweiten Stufe nachgeordneten Baueinheit durch Entlüftung in die Umgebungsluft erfolgen. Andererseits kann die Absaugung des Luftmassenstroms aus einer der zweiten Stufe nachgeordneten Baueinheit durch Zuführung in einen externen Massenstrom ermöglicht werden.

Der externe Massenstrom kann die Prozessluftseite einer Flugzeugklimaanlage sein.

Weitere Einzelheiten und Vorteile der Erfindung werden anhand von in der Zeichnung dargestellten Ausführungsbeispielen erläutert.
- Figur 1:: zeigt den Schnitt durch eine erste erfindungsgemäße Ausgestaltung der Erfindung,
- Figur 2:: zeigt eine teilweise geschnittene perspektivische Darstellung gemäß Figur 1 und
- Figur 3:: zeigt eine perspektivische Darstellung einer Ausführungsform der Erfindung in einer Modifikation gegenüber der Ausführungsvariante gemäß der Figuren 1 und 2.

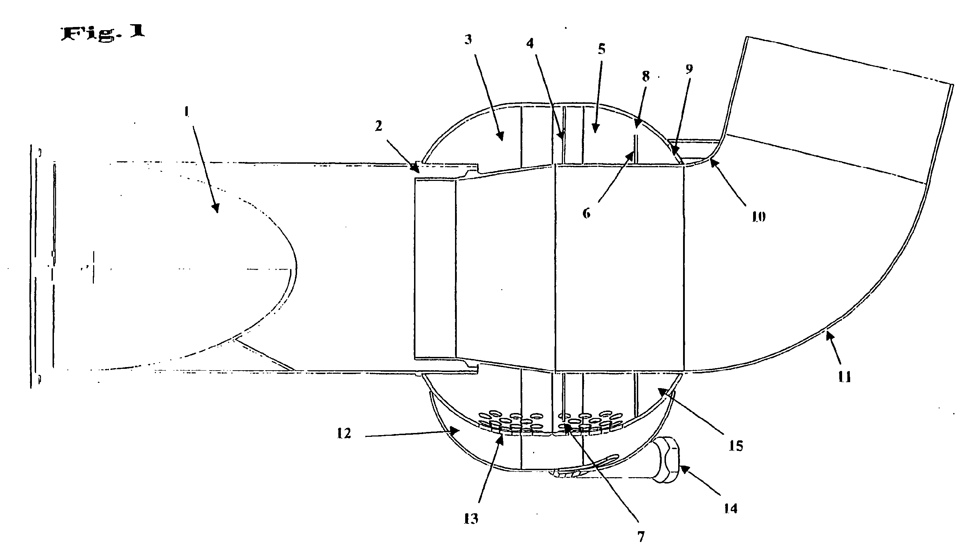

In der in der Figur 1 dargestellten Ausführungsvariante des Drallabscheider erfährt ein feuchter Luftmassenstrom durch einen Drallerzeuger 1 eine rotatorische Bewegungsüberlagerung, wodurch Wassertröpfchen an die Innenwandung eines zylindrischen Rohres transportiert werden und durch einen nachgeschalteten, umlaufenden Ringspalt 2 vom feuchten Primärmassenstrom abgetrennt werden und in eine erste Stufe 3 einer Abtrennkammer transportiert werden. Das Ende der ersten Stufe 3 wird durch eine Prallfläche 4 definiert, auf die die abgetrennten Wassertröpfchen nach der Abtrennung aus dem Primärmassenstrom auftreffen. Auf der Oberfläche der Prallfläche 4 fließen die der Schwerkraftrichtung folgend in einen sogenannten Abscheidersumpf 12 ab. Der Abscheidersumpf 12 befindet sich in Richtung der Schwerkraft auf der unteren Seite der mehrstufigen Kammer und erstreckt sich entsprechend der hier dargestellten Ausführungsform in Längsrichtung über die Breite der ersten und zweiten Stufe. Der Eintritt in den Abscheidersumpf kann dadurch durch eine Perforation 13 des Kanalgehäuses gebildet sein, an das der Sumpf 12 anschließt.

Die die erste Stufe begrenzende Prallfläche 4 verfügt zusätzlich über mindestens eine Öffnung 7, vorzugsweise als Fenster ausgeführt, das direkt über dem Eintritt in den Abscheidersumpf 12 angeordnet ist. Durch das Fenster ist eine Luftmassenstromverbindung zwischen der ersten Stufe 3 und der zweiten Stufe 5 der Abscheidekammer ausgebildet.

Die zweite Stufe 5 erfüllt die Funktion einer Absetzkammer. Der Entlüftungsmassenstrom wird dabei in von dem Abscheidersumpf 12 abgewandter Richtung durch die zweite Stufe 5 hindurchgesaugt, wobei die Strömungsgeschwindigkeit des Entlüftungsmassenstroms in dieser Stufe so gering sein muss, dass mitgerissene Wassertröpfchen nicht mit in die dritte Stufe 15 hineingefördert werden. Der Entlüftungsmassenstrom wird mittels einer Bypassleitung 10 zwischen der dritten Stufe 15 der Kammer dem getrockneten Primärmassenstrom wieder zugeführt, wobei alternative Formen der Absaugung durch Ausnutzung einer internen oder externen Drucksenke denkbar sind.

Umfangreiche experimentelle Untersuchungen haben gezeigt, dass bis zu 5 % höhere Trenngrade durch eine gezielte Entlüftung der Kammer erzielt werden können. Insbesondere bei erhöhten Massendurchsätzen ermöglicht die Entlüftung der Kammer eine deutliche Steigerung des erzielbaren Trenngrads gegenüber einer Kammerausführung ohne Entlüftung. Allerdings muss verhindert werden, dass durch einen zu großen Entlüftungsmassenstrom in der Absetzstufe der Kammer keine vollständige Trennung von Luft und Wasser mehr erfolgen kann und bereits akkumulierte Tröpfchen der ersten Stufe wieder mit angesaugt werden. Der maximale Entlüftungsmassenstrom erfährt deshalb eine betragsmäßige Limitierung für gegebene Betriebsbedingungen.

Die dritte Stufe 15 dient der lageunabhängigen Strömungsrückführung der Entlüftung über dem Durchmesser der Kammer. Die Stromführung zwischen der zweiten und dritten Stufe erfolgt dabei durch mindestens eine dem Sumpf 12 gegenüberliegend angeordnete Öffnung 8 in der Trennwand 6 zwischen der zweiten und dritten Stufe, das vorzugsweise als Fenster ausgeführt ist.

Der Entlüftungsmassenstrom wird stromabwärts der dritten Stufe 15 der Kammer dem Primärmassenstrom wieder zugeführt. Durch eine Drucksenke, beispielsweise durch Ausbildung eines Ejektors, wird der Entlüftungsmassenstrom durch die mehrstufige Kammer hindurchgesaugt und das Druckniveau in der Abtrennkammer abgesenkt. Für die Ausführung der Absaugung können dabei verschiedene Lösungswege gewählt werden.

Das im Sumpf 12 gesammelte Wasser wird durch einen Auslassstutzen 14 abdrainiert.

Die Absaugung kann durch unterschiedliche Ausführungsformen realisiert werden.

Die Drucksenke, die zur Entlüftung der Kammer genutzt wird, kann wie folgt gelöst werden. Zunächst kann die Entlüftung durch Rückführung in den getrockneten Primärmassenstrom erfolgen.

Bei dieser Ausführungsform durchströmt ein Teil des feuchten Primärmassenstroms zusammen mit dem abgetrennten Wasser die dreistufige Kammer, wobei in der zweiten Stufe eine Sekundärtrennung der beiden Phasen erfolgt und der dadurch getrocknete Teil des Sekundärstroms durch geeignete Maßnahmen (z. B. einen Ejektor) stromabwärts der zweiten Stufe der Kammer dem Primärmassenstrom wieder zugeführt wird. Die Kammerentlüftung stromabwärts der zweiten Stufe kann beispielsweise in Form eines umgedrehten Pitot-Rohres ausgeführt werden, das nach dem Ejektorprinzip wirkt, wobei die Absaugungsvorrichtung wahlweise in der zweiten oder dritten Stufe der Kammer angeordnet werden kann.

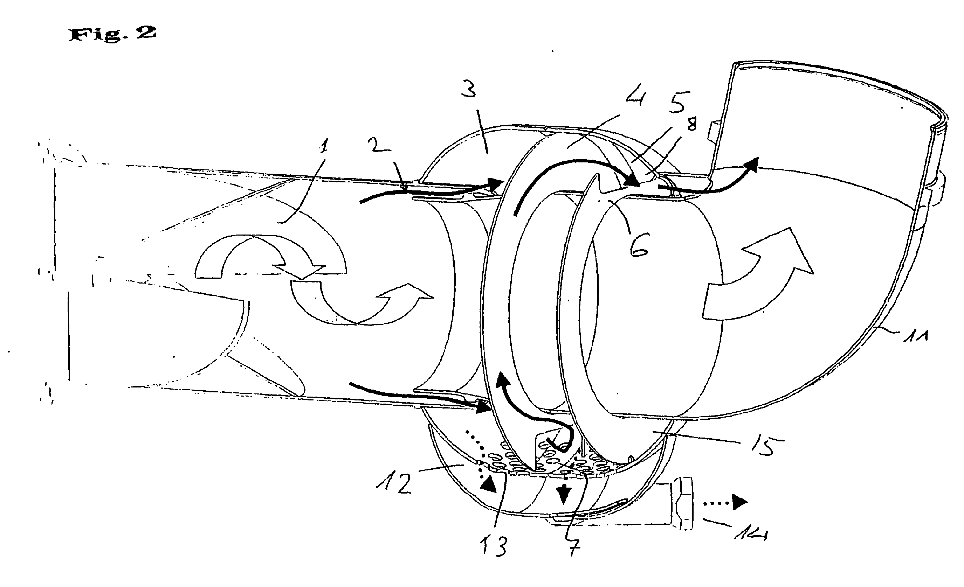

Alternativ hierzu kann auch statt des umgedrehten Pitot-Rohres eine Entlüftungswirkung durch Nutzung eines niedrigen Druckniveaus am Innenradius eines dem Drallabscheider nachgeschalteten Krümmers erfolgen, wie dies in den Figuren 1 und 2 gezeigt ist. Das niedrige Druckniveau entsteht aufgrund der Massenträgheit der Luft und der Umlenkung im Krümmer. Dabei ist eine Verbindung, beispielsweise ein Rohrstück, zwischen der zweiten oder dritten Kammerstufe mit dem niedrigen Druckniveau am Innenradius des Krümmers ausreichend, um die gewünschte Entlüftung zu erzielen.

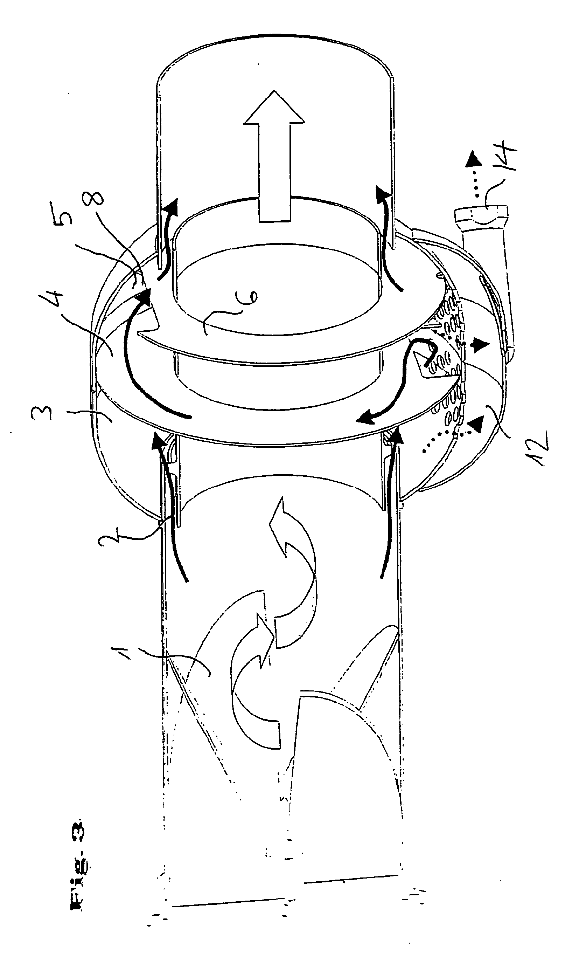

Eine alternative Variante ist die Absaugung mittels eines umlaufenden Ringspaltes, wie sie beispielsweise in der Ausführungsvariante gemäß Figur 3 gezeigt ist. Der Ringspalt schließt an die dritte Stufe der Kammer an und stellt so eine Strömungsverbindung zwischen der Kammer und dem Primärmassenstrom her. Durch eine Öffnung 8 in der Trennwand 6 kann dabei eine Anpassung des benötigten Entlüftungsmassenstroms erfolgen.

Diese Ausführungsformen haben den Vorteil, dass der Leckageluftanteil auf ein Minimum reduziert wird, da der mit dem Wasseranteil abgetrennte Luftmassenstrom zu großen Teilen der Luftseite zugeführt werden kann. Nur ein geringer Luftmassenanteil verlässt mit dem abgetrennten Wasser den Abscheider durch den Auslassstutzen 14.

Als alternative Form der Entlüftung kann auch eine gezielte Entlüftung der Kammer durch Ausnutzung der Drucksenke zwischen Prozessluftseite und der Umgebungsluft gewählt werden. Diese Variante kann überall dort eingesetzt werden, wo ein zusätzlicher Leckage-Luftanteil der Prozessluft (Primärmassenstrom) zu dem Leckage-Luftanteil durch den Auslassstutzen 14 akzeptiert werden kann.

Als weitere Möglichkeit kann der Luftmassenstrom einem externen Massenstrom mit niedrigerem Druckniveau zugeführt werden. Für den Anwendungsfall in einer Flugzeugklimaanlage besteht hierbei die Möglichkeit, die Entlüftung in die Prozessluftseite vorzunehmen, wobei die Leckage der Anlage nicht negativ beeinflusst wird. Hierfür muss jedoch gewährleistet sein, dass das angezapfte Druckniveau über alle Betriebsbereiche niedrigere Werte annimmt, als die Kammer des Abscheiders.

Als Alternative hierzu könnte auch eine Entlüftung in den Stauluftkanal einer Flugzeugklimaanlage erfolgen, wobei auch hierzu entsprechende Vorrichtungen (Ejektor, Anti-Pitot-Rohr, usw.) notwendig sind, um einen definierten Entlüfungsmassenstrom einstellen zu können. Bei dieser Variante muss allerdings ein etwas erhöhter Leckage-Luftanteil akzeptiert werden.

## Patentansprüche

1. Wasserabscheider für Klimaanlagen, vorzugsweise Flugzeugklimaanlagen, mit:
- einem Drallerzeuger (1),
- einem diesen umgebendes Gehäuse,
- einer nachgeschalteten um das Gehäuse herum angeordneten Abtrennkammer zum Sammeln des an der Gehäuseinnenwandung abgeschiedenen Wassers , die in einen Abscheidesumpf mündet und
- mindestens einer Öffnung (2), die im Gehäuse zur Abtrennkammer hin vorgesehen ist und in die erste Stufe (3) der Abtrennkammer führt,
wobei die Abtrennkammer mehrstufig ausgebildet ist,
**dadurch gekennzeichnet,**
**dass** die Abtrennkammer drei Stufen (3, 5, 15) aufweist, welche dadurch gebildet sind, daß eine Prallfläche (4) die erste Stufe (3) von der zweiten Stufe (5) trennt und daß eine Trennwand (6) die zweite Stufe (5) von der dritten Stufe (15) trennt, wobei die erste Stufe (3) der Abtrennkammer der Akkumulation der Wassertropfen dient, die zweite Stufe(5) der Abtrennkammer dem Absetzen der akkumulierten Wassertropfen dient und die dritte Stufe (15) der Abtrennkammer der Absaugung des Luftmassenstromes dient, wobei einerseits in der die erste (3) von der zweiten Stufe (5) trennenden Prallfläche (4) und andererseits in der die zweite (5) von der dritten Stufe (15) trennenden Trennwand (6) jeweils mindestens eine Öffnung (7, 8) vorgesehen ist.

2. Wasserabscheider nach Anspruch 1, **dadurch gekennzeichnet, daß** die drei Stufen (3, 5, 15) und ihre zugeordneten Funktionen in voneinander getrennten Baueinheiten realisiert sind.

3. Wasserabscheider nach einem der Ansprüche 1 oder 2, **dadurch gekennzeichnet, daß** die Absaugung des Luftmassenstromes aus einer der zweiten Stufe (5) nachgeordneten Baueinheit durch interne Zuführung in den Primärmassenstrom erfolgt.

4. Wasserabscheider nach Anspruch 3, **dadurch gekennzeichnet, daß** die interne Absaugung des Luftmassenstromes und die interne Zuführung in den Primärmassenstrom mittels eines Anti-Pitot-Rohres erfolgt.

5. Wasserabscheider nach Anspruch 3, **dadurch gekennzeichnet, daß** die interne Absaugung des Luftmassenstromes und die interne Zuführung in den Primärmassenstrom mittels Anzapfens (9,10) des Innenradius eines nachgeschalteten Krümmers (11) erfolgt.

6. Wasserabscheider nach Anspruch 3, **dadurch gekennzeichnet, daß** die interne Absaugung des Luftmassenstromes und die interne Zuführung in den Primärmassenstrom mittels eines ringspaltförmigen Ejektors erfolgt.

7. Wasserabscheider nach Anspruch 1, **dadurch gekennzeichnet, daß** die Absaugung des Luftmassenstromes aus einer der zweiten Stufe nachgeordneten Baueinheit durch Entlüftung in die Umgebungsluft erfolgt.

8. Wasserabscheider nach Anspruch 1, **dadurch gekennzeichnet, daß** die Absaugung des Luftmassenstromes aus einer der zweiten Stufe nachgeordneten Baueinheit durch Zuführung in einen externen Massenstrom erfolgt.

9. Wasserabscheider nach Anspruch 8, **dadurch gekennzeichnet, daß** der externe Massenstrom die Prozeßluftseite einer Flugzeugklimaanlage ist.

## Claims

1. A water separator for air-conditioning systems, preferably for aircraft air-conditioning systems, comprising:
- a swirl generator (1);
- a housing surrounding it;
- a downstream separation chamber arranged around the housing for the collection of the water deposited at the inner wall of the housing which opens into a separation sump; and
- at least one aperture (2) provided toward the separation chamber in the housing and leading into the first stage (3) of the separation chamber,
with the separation chamber being made in multiple stages,
**characterized in that**
the separation chamber has three stages (3, 5, 15) formed **in that** a baffle surface (4) separates the first stage (3) from the second stage (5) and a partition wall (6) separates the second stage (5) from the third stage (15), with the first stage (3) of the separation chamber serving the accumulation of the water drops, the second stage (5) of the separation chamber serving the deposition of the accumulated water drops and the third stage (15) of the separation chamber serving the extraction of the air mass flow, with at least one respective opening (7, 8) being provided in the baffle surface (4) separating the first stage (3) from the second stage (5), on the one hand, and in the partition wall (6) separating the second stage (5) from the third stage (15), on the other hand.

2. A water separator in accordance with claim 1, wherein the three stages (3, 5, 15) and their associated functions are realized in assemblies separated from one another.

3. A water separator in accordance with claims 1 or 2, wherein the extraction of the air mass flow from an assembly downstream of the second stage (5) takes place by internal delivery into the primary mass flow.

4. A water separator in accordance with claim 3, wherein the internal extraction of the air mass flow and the internal delivery into the primary mass flow take place by means of an anti-Pitot tube.

5. A water separator in accordance with claim 3, wherein the internal extraction of the air mass flow and the internal delivery into the primary mass flow take place by means of tapping (9, 10) the inner radius of a downstream manifold (11).

6. A water separator in accordance with claim 3, wherein the internal extraction of the air mass flow and the internal delivery into the primary mass flow take place by means of an ejector in the shape of an annular gap.

7. A water separator in accordance with claim 1, wherein the extraction of the air mass flow from an assembly downstream of the second stage takes place by venting into the environmental air.

8. A water separator in accordance with claim 1, wherein the extraction of the air mass flow from an assembly downstream of the second stage takes place by delivery into an external mass flow.

9. A water separator in accordance with claim 8, wherein the external mass flow is the process air side of an aircraft air-conditioning system.

## Revendications

1. Séparateur d'eau pour climatiseurs, en particulier des climatiseurs pour avion, comportant:
- un générateur de tourbillons (1),
- un carter entourant celui-ci,
- une chambre de séparation, montée en aval et disposée autour du carter, laquelle est destinée à collecter l'eau séparée sur la paroi intérieure du carter et laquelle débouche dans un réservoir de séparation, et
- au moins une ouverture (2), qui est prévue dans le carter vers la chambre de séparation et mène vers le premier palier (3) de la chambre de séparation,
ladite chambre de séparation étant réalisée à plusieurs paliers,
**caractérisé en ce que**
la chambre de séparation comporte trois paliers (3, 5, 15) qui sont formés par le fait qu'une surface d'impact (4) sépare le premier palier (3) du deuxième palier (5) et qu'une cloison (6) sépare le deuxième palier (5) du troisième palier (15), sachant que le premier palier (3) de la chambre de séparation est destiné à l'accumulation des gouttes d'eau, le deuxième palier (5) de la chambre de séparation est destiné au dépôt des gouttes d'eau accumulées et le troisième palier (15) de la chambre de séparation est destiné à l'aspiration du flux massique d'air, au moins une ouverture (7, 8) étant prévue respectivement, d'une part, dans la surface d'impact (4) séparant le premier palier (3) du deuxième palier (5) et, d'autre part, dans la cloison (6) séparant le deuxième palier (5) du troisième palier (15).

2. Séparateur d'eau selon la revendication 1, **caractérisé en ce que** les trois paliers (3, 5, 15) et leurs fonctions correspondantes sont réalisés dans des unités séparées les unes des autres.

3. Séparateur d'eau selon la revendication 1 ou 2, **caractérisé en ce que** l'aspiration du flux massique d'air hors d'une unité montée en aval du deuxième palier (5) est effectuée par l'admission interne dans le flux massique primaire.

4. Séparateur d'eau selon la revendication 3, **caractérisé en ce que** l'aspiration interne du flux massique d'air et l'admission interne dans le flux massique primaire sont effectuées au moyen d'un tube anti-Pitot.

5. Séparateur d'eau selon la revendication 3, **caractérisé en ce que** l'aspiration interne du flux massique d'air et l'admission interne dans le flux massique primaire sont effectuées au moyen de la mise en perce (9, 10) du rayon intérieur d'un coude (11) monté en aval.

6. Séparateur d'eau selon la revendication 3, **caractérisé en ce que** l'aspiration interne du flux massique d'air et l'admission interne dans le flux massique primaire sont effectuées au moyen d'un éjecteur en forme de fente annulaire.

7. Séparateur d'eau selon la revendication 1, **caractérisé en ce que** l'aspiration du flux massique d'air hors d'une unité, montée en aval du deuxième palier, est effectuée par une purge d'air vers l'air ambiant.

8. manche selon la revendication 1, **caractérisé en ce que** l'aspiration du flux massique d'air hors d'une unité, montée en aval du deuxième palier, est effectuée par acheminement vers un flux massique externe.

9. Séparateur d'eau selon la revendication 8, **caractérisé en ce que** le flux massique externe est le côté de l'air du processus d'un climatiseur pour avion.
